# EUROPEAN PATENT SPECIFICATION

(11) **EP 0 378 688 B1**
(45) Date of publication and mention of the grant of the patent: **17.03.1993**
(21) Application number: 89905771.5
(22) Date of filing: 23.05.1989
(51) Int. Cl.: B23B 31/20

(54) **COLLET FOR CUTTING TOOL HOLDER**
SPANNZANGE FüR HALTER EINES SCHNEIDEWERKZEUGS
PINCE DE SERRAGE POUR SUPPORT D'OUTIL DE COUPE

(30) Priority: 23.05.1988 JP 126801/88
(43) Date of publication of application: 25.07.1990
(73) Proprietor: MIZOGUCHI IRON WORKS & CO., LTD., Ikoma-shi Nara-ken630-01 (JP)
(72) Inventor: MIZOGUCHI, Haruki Mizoguchi Iron Works & Co., Ltd., Ikoma-shi Nara-ken 630-01 (JP)
(74) Representative: Abbie, Andrew Kenneth
(86) International application number: PCT/JP89/00513
(87) International publication number: WO 89/11369

(56) References cited:
- EP-A- 0 134 988
- DD-A- 219 407
- JP-B- 473 434
- JP-U-61 205 709
- MACHINES & TOOLING vol. 42, no. 9, 1971, M.ORLIKOV;Y.KUZNETSOV: "SELECTION OF COLLET CHUCK PARAMETERS"

## Description

The present invention relates to a collet for a cutting tool holder.

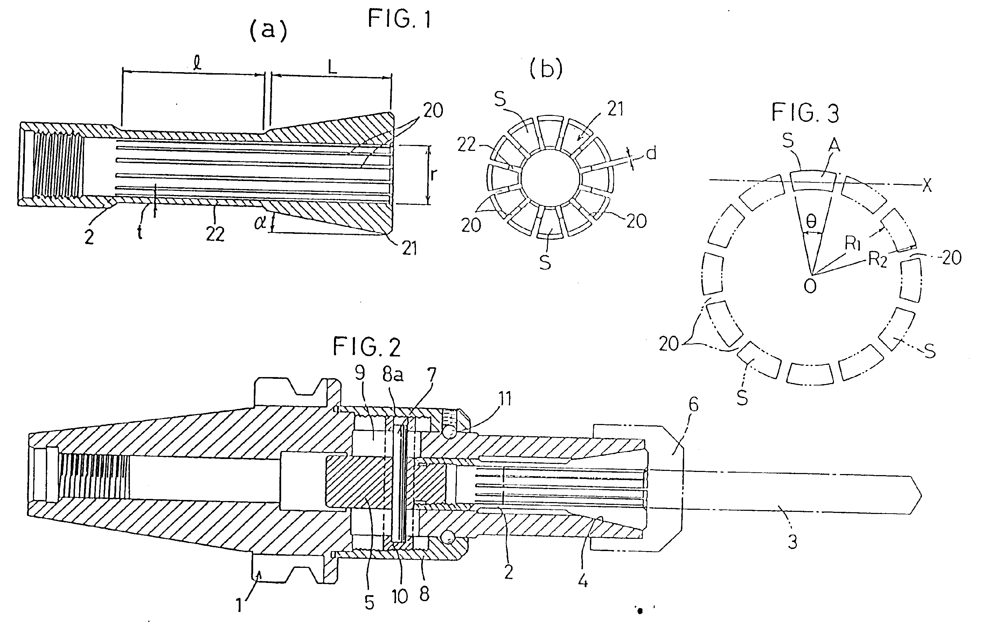

Fig. 2 of the accompanying drawings shows a prior art holder for an end mill, a drill or other cutting tools for drilling and boring which comprises a holder body 1 insertable in a spindle of a machine tool and a collet 2 insertable in the body 1 so as to align with its axis. After inserting a cutting tool 3 into the collet 2, the collet is pulled into the holder body 1 along a tapered portion 4, so that its diameter will reduce to chuck the cutting tool 3.

As means for moving (back and forth) the collet 2, it is known (a) to draw a drawing screw 5 in threaded engagement with the collet 2 by means of a rod from the side of the machine tool (direct drawing method), (b) to screw a locknut 6 on the holder body 1 as shown by chain line and tighten it and (c) to move a pin 7 extending transversely through the drawing screw 5 in an axial direction by turning a clamping collar 8, as shown by a solid line in Fig. 2.

In the drawing, numeral 9 designates a through hole in the holder body 1 through which the pin 7 extends. They have a width (in the circumferential direction of the body 1) which is equal to the diameter of the pin 7 and have a predetermined length (in the axial direction of the body 1). The pin 7 is received in the through hole 9 so as to be movable axially but not circumferentially with respect to the holder. Numeral 10 designates a screw ring in which the pin 7 is fitted. The screw ring 10 is in threaded engagement with female threads 8a on a clamping collar 8. As the clamping collar 8 is turned, the pin 7 is moved right and left through the screw ring 10. Numeral 11 designates a bearing.

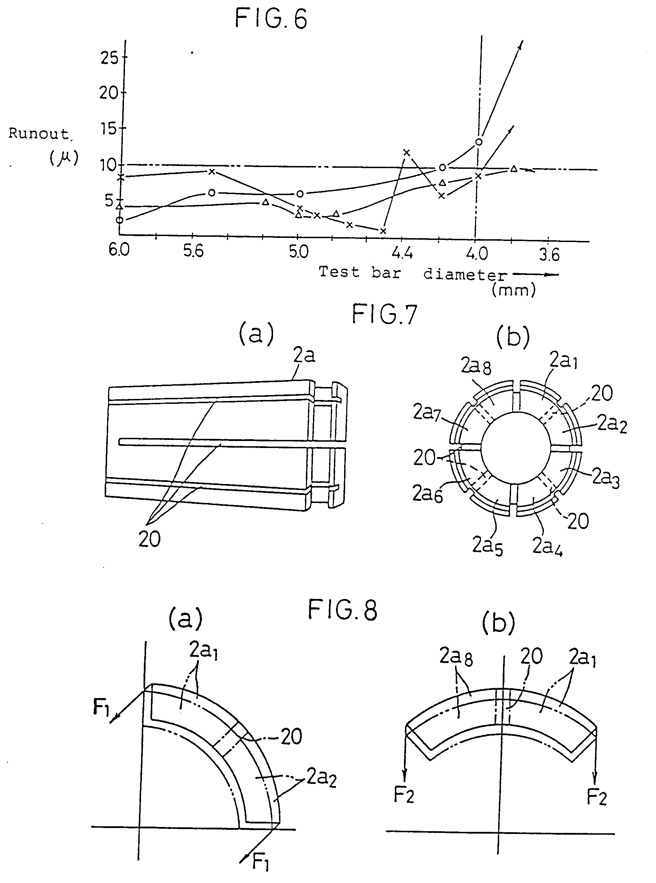

A spring collet 2a as shown in Figs. 7a and 7b is chiefly used with the abovementioned moving method (c). It is formed with slits 20 extending from both end faces thereof. It can hold a cutting tool with sufficient force and accuracy (degree of runout of the cutting tool being chucked).

When this collet 2a is pulled to reduce its diameter, segments 2a₁ and 2a₂ divided by a respective slit 20 so as to be continuous with each other at their front ends will undergo at their front ends a shrinking force F₁ in the direction of arrows in Fig. 8a.

The segments 2a₁ and 2a₈, which are continuous with each other at their rear ends, will undergo at their rear ends a shrinking force F₂ in the direction of arrows in Fig. 8b. Thus, clamping forces F₁ and F₂, which differ in direction from each other, act on the segment 2a₁ at its front and rear ends, respectively. This will cause the segment 2a₁ to be twisted in the direction of length. All the segments 2a₁ to 2a₈ will be subjected to the same kind of twist.

The rate of twist increases with an increase in the shrinkage of diameter. As the rate of twist increases, so the the chucking accuracy decreases. Thus, with this type of collet 2a, it is necessary to set the srinkage rate (rate of reduction in diameter) at about 0.2 mm in order to give a satisfactorily accurate finish in end milling by use of the cutting tool 3.

the above-mentioned problem could be solved by increasing the number of slits. This number is limited in practice to 16 slits (8 slits extending from each end) in view of the trength of the entire collet.

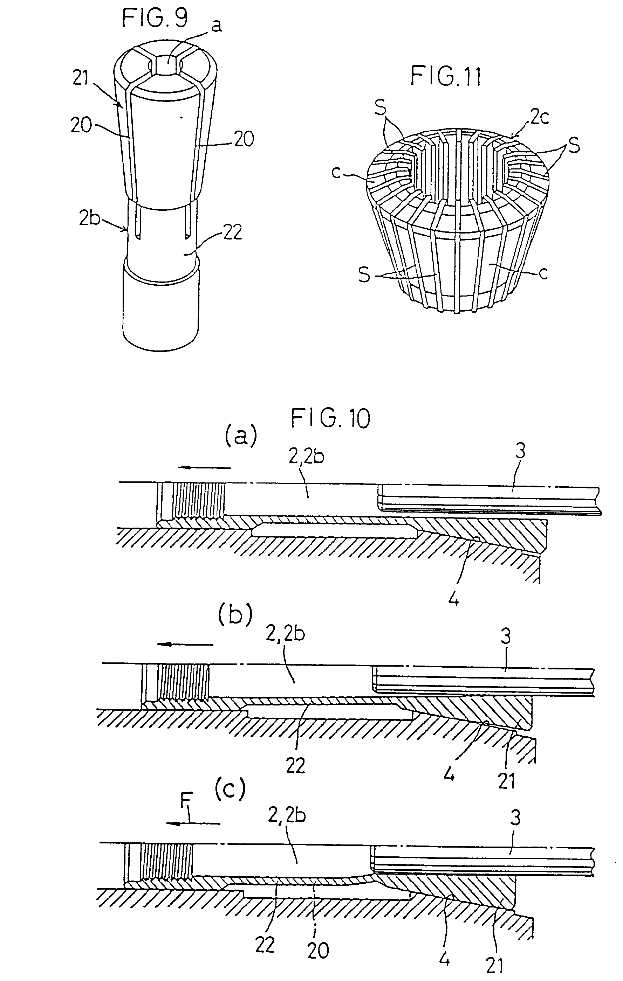

Fig. 9 shows a collet 2b which is mainly employed with the moving methods (a) and (b). It comprises a trucated conical portion 21 and a cylindrical portion 22 integral with each other at the small-diameter end of the portion 21. The collet 2b is formed with a plurality of slits 20 which extend into the cylindrical portion arranged at equal angular intervals from one another and extending axially and inwardly from an opening a which is for receiving a cutting tool 3. The number of slits 20 is usually 3, 4 or 6.

If this collet 2b is used to chuck a cutting tool 3 having a diameter considerably smaller than the inner diameter of the collet 2b as shown in Fig. 10a, there will be a gap between the inner surface of the truncated conical portion 21 and the outer surface of the cutting tool 3 as shown in Fig. 10b. This makes it difficult to grip the cutting tool with sufficient force and accuracy. Thus if the collet 2b is used for end milling, the shrinkage rate has to be limited to about 0.2 mm in order to give a satisfactory finish.

Fig. 11 shows another known collet 2c having a plurality of segments S which are not continuous with the adjacent ones as with the collets 2a and 2b. Instead, they are bound together by means of synthetic resin c. But the use of synthetic resin c lowers the accuracy of chucking.

Specification DD-A-219 407 cited by the EPO shows a metal collet having a truncated conical portion having a small-end diameter and a cylindrical portion continuous with said small-diameter end, said collet being formed with slits arranged at equal angular intervals and extending axially inwards from an opening thereof for receiving a cutting tool into said cylindrical portion, said slits defining segments of said cylindrical portion.

It is an object of the present invention to provide a collet which can grip with a required force and accuracy cutting tools having a large range of diameters.

Accordingly, the invention provides a collet for a cutting tool holder having a truncated conical portion having a small-end diameter and a cylindrical portion continuous with said small-diameter end, said collet being formed with slits arranged at equal angular intervals and extending axially inwards from an opening thereof for receiving a cutting tool into said cylindrical portion, said slits defining segments of said cylindrical portion characterized in that the number of segments provided is plus or minus two of the number of segments required for the value of the central angle ϑ of each segment to be the maximum within the range where the geometric moment of inertia of the entire cylindrical portion comprising the product of the number of individual segments and the geometrical moment of inertia of a section of an individual segment about a line which passes through the centroid of said section and is perpendicular to a line which passes through the axis of the collet and said centroid is essentially constant.

The invention includes a collet for a cutting tool holder having a truncated conical portion having a small-diameter end and a cylindrical portion continuous with said small-diameter end, said collet being formed with slits arranged at equal angular intervals and extending axially inwards from an opening thereof for receiving a cutting tool, each slit having a uniform width over the whole length thereof and said cylindrical portion being divided into twelve segments by said slits.

In order that the invention may be well understood, an embodiment thereof, which is given by way of example only, will now be described with reference to the accompanying drawings, in which:
Fig. 1a is a sectional view of a collet;
Fig. 1b is an end view from the right of Fig. 1a;
Fig. 2 is a sectional view showing the collet mounted in a holder;
Fig. 3 is a sectional view of the cylindrical portion of the collet;
Fig. 4 is a graph showing the relationship between the central angle of a segment of the collet and the geometrical moment of inertia of the section;
Fig. 5 is a graph showing the relationship between the central angle of a segment and the geometrical moment of inertia of the collet cylindrical section;
Fig. 6 is a graph showing the runout at the end of test bars mounted in the collet;
Fig. 7a is a sectional view of a prior art collet;
Fig. 7b is an end view from the right of Fig. 7a;
Figs 8a and 8b are views showing how the prior art collet shown in Fig. 7 operates;
Fig. 9 is a perspective view of another prior art collet;
Figs. 10a to 10c are views showing how collets and cutting tools are tightened; and
Fig. 11 is a perspective view of another prior art collet.

The present inventors have found that if an additional force F is applied to collet 2b or 2 (shown in Fig1) when it is in the position shown in Fig. 10b, it moves to the position shown in Fig. 10c. In this state, cylindrical portion 22 will be curved so that the truncated conical portion 21 will come into close contact at its tapered portion with the inner surface of the holder body 1. This improves the accuracy of chucking.

How much the cylindrical portion 22 bends depends largely on its rigidity. The rigidity is thought to be determined by the wall thickness t of the cylindrical portion 22, the length of the slits 20 in the cylindrical portion 22. The wall thickness is determined by the pull-in (pull-up) force and thus cannot be reduced beyond a permissible level. The length of the cylindrical portion 22 is determined by the length of the holder body 1 and by the means for reducing the diameter of the collet and thus cannot be increased more than necessary. In other words, the wall thickness and the length of the cylindrical portion 22 are determined by the holder body 1 itself.

The present inventors prepared various collets 2 of the type shown in Fig1 having cylindrical portions 22 having different wall thicknesses t directed into different numbers of segments S. The central angle ϑ formed around the axis 0 of each collet with respect to the cross-section A of each segment S was measured for each collet. As a result, the inventors found the range of central angle ϑ where the geometrical moment of inertial of the entire cylindrical portion 22 comprising the product of the number of individual segments and the geometrical moment of inertia of section (A) of an individual segment about the line X which passes the centroid of the section and is perpendicular to a line which passes through axis (0) of the collet and said centroid, is essentially constant. Such a range was found to be up to 30 degrees (± 5 degrees) irrespectives of the thickness t.

It was found that the state shown in Fig. 10c can be attained by setting the central angle ϑ within the above-described range while taking into consideration the length of the slits 20 in the cylindrical portion 22.

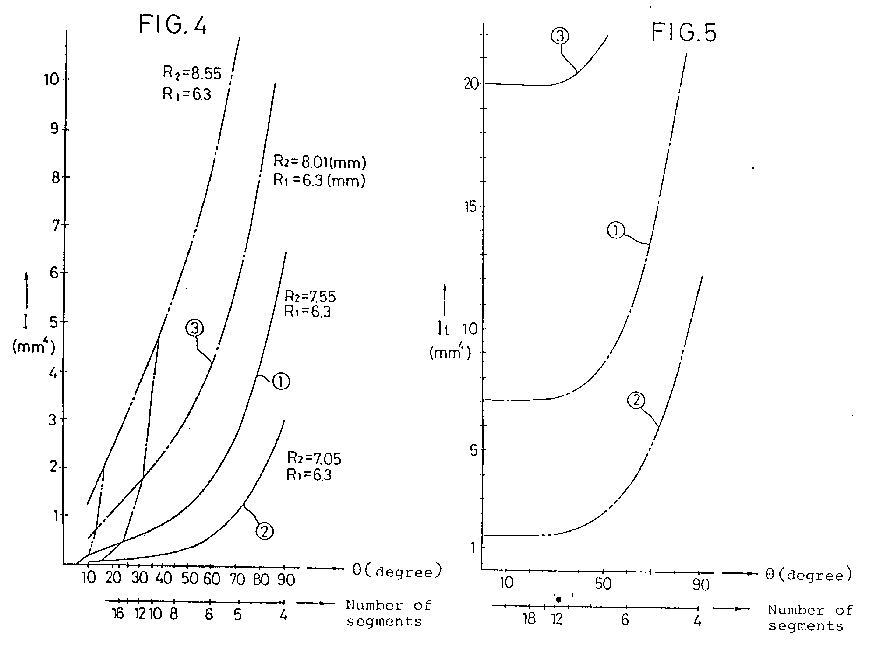

As shown in Fig. 5, from the relationship between the geometrical moment of inertia I of each segment S multiplied by the number of segments, that is, the geometrical moment of inertia Iₜ of the entire cylindrical portion 22 and the central angle ϑ of each segment, no substantial reduction in the Iₜ value is obtained by reducing the central angle ϑ beyond approximately 30 degrees. This means that once a central angle of about 30 degrees is attained, any further division of the cylindrical portion 22 will only increase the number of manufacturing steps and lower the tensile strength of the cylindrical portion 22 and will not serve to significantly lower the rigidity thereof, in other words, will not substantially change the state shown in Fig. 10c. The curves in Figs. 4 and 5 represented by the same numerals 1 to 3 show the results of tests conducted under the same conditions.

To obtain the desired large chucking range, the collet 2 theoretically should be provided with the number of segments required for the central angle ϑ of each segment to be the maximum within the range where the geometric moment of inertia Iₜ of the entire cylindrical portion comprising the product of the number of individual segments and the geometrical moment of inertia of a section A of an individual segment about a line which passes through the centroid of said section and is perpendicular to a line which passes through axis 0 of the collet and said centroid is essentially constant.

In practice, the collet 2 may be provided with the number of segments required for the value of angle ϑ to be the maximum within the above-described range, plus or minus two.

As is apparent from Fig. 5, if the angle ϑ exceeds the above-described range, the Iₜ value will increase sharply, which is not desirable from the viewpoint of rigidity. If it is smaller than the maximum value of the above range, the falling rate of rigidity will slow down and thus dividing further will have no useful effect. Furthermore, this will reduce the strength of the whole structure to an unacceptable level and increase the number of manufacturing steps.

The collet 2 shown in Fig. 1 formed with slits 20 having a uniform width over the whole length should preferably have 12 segments divided by the slits 20. This is because, as is apparent from Fig. 4, dividing the collet into 12 segments will be the nearest to the size determined by the value of angle ϑ as described above.

The I value of each segment S is given by the following formula:$\text{I =} \frac{\text{1}}{\text{4}} \text{(R₂⁴ - R₁⁴) {} \frac{\text{ϑ}}{\text{2}} \text{+ 1/2sin2} \frac{\text{ϑ}}{\text{2}} \text{} -} \frac{\text{4}}{\text{9}} \text{·} \frac{\text{(R₂} {\text{}}^{{\text{}}^{\text{3}}} \text{- R₁} {\text{}}^{{\text{}}^{\text{3}}} \text{) ²}}{\text{R₂} {\text{}}^{{\text{}}^{\text{2}}} \text{- R₁²}} \text{X} \frac{\text{sin² ϑ/2}}{\text{ϑ/2}}$
wherein
R₁: Internal diameter of the cylindrical portion 21,
R₂: External diameter of the same,
t = R₁ - R₂, and ϑ is the central angle (radian).

The collet can offer a satisfactory finish by end milling even if the rate of shrinkage is more than 2.00 mm, by setting the number of segments forming the cylindrical portion as well as the geometrical moment of inertia of the section of each segment to optimum values.

Since the rate of diameter shrinkage is large, cutting tools such as end mills and drills having different diameters can be chucked with a smaller number of collets.

Also for easy machining and higher machining accuracy, the internal diameter of the truncated conical portion should preferably be as large as possible. If the shrinkage rate of diameter is sufficiently large, the collet can be machined to a larger internal diameter than the diameter desired because the diameter can be reduced to the desired diameter when the collet is actually used. For example, if the desired diameter is 4 mm, the collet may be machined to an internal diameter of 6 mm.

Collets 2 as shown in Fig 1 and having the following dimensions were made.
Material: 9 kinds of spring steel (sup 9)
Angle α of the tapered surface of the truncated conical portion 21: 10 degrees
Internal diameter γ of the truncated conical portion 21: 6 mm, 8 mm, 10 mm and 12 mm
Length ℓ of the cylindrical portion 22: 24 mm and 30 mm
Thickness t of the cylindrical portion 22: 1.25 mm
Number of slits 20: 12
Width d of slits 20: 0.75 mm

The relation between the internal diameter γ and the length L of the truncated conical portion 21 is as follows;

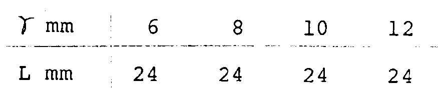

Among the above-described collets 2, the one having the value γ of 6 mm and the value ℓ of 24 mm was inserted in the holder shown in Fig. 2 to chuck a series of test bars having such diameters as to reduce from 6 mm in increments of 0.2 mm. The runout of each test bar was checked at a point apart from the end of the holder by a distance 5 times the diameter of the test bar. The results are shown in Fig. 6. Three specimens were used in this test.

The results show that the runout of the test bars having diameters within the range of 6 - 4 mm was less than 15 microns and thus the machining accuracy was satisfactory. The rate of shrinkage of diameter was 2.0 mm.

Test bars of different dimensions were put to a similar test and similar results were obtained.

The specimens prepared had slits 20 having a width d of 0.75 mm and correspondingly the central angle ϑ for each segment was 25 - 26 degrees. If the thickness t is large, the length ℓ should be determined taking into consideration the thickness t (rigidity is inversely proportional to ℓ). The angle of taper α is not limited to 10 degrees but should be as small as possible.

## Claims

1. A metal collet (2) for a cutting tool holder having a truncated conical portion (21) having a small-end diameter and a cylindrical portion (22) continuous with said small-diameter end, said collet being formed with slits (20) arranged at equal angular intervals and extending axially inwards from an opening thereof for receiving a cutting tool (3) into said cylindrical portion, said slits (20) defining segments (S) of said cylindrical portion characterized in that the number of segments provided is plus or minus two of the number of segments required for the value of the central angle (ϑ) of each segment to be the maximum within the range where the geometric moment of inertia (Iₜ) of the entire cylindrical portion (22) comprising the product of the number of individual segments and the geometrical moment of inertia of a section (A) of an individual segment about a line (X) which passes through the centroid of said section and is perpendicular to a line which passes through the axis (O) of the collet and said centroid is essentially constant.

2. A metal collet (2) for a cutting tool holder having a truncated conical portion (21) having a small-diameter end and a cylindrical portion (22) continuous with said small-diameter end, said collet being formed with slits (20) arranged at equal angular intervals and extending axially inwards from an opening thereof for receiving a cutting tool (3), each slit (20) having a uniform width over the whole length thereof and said cylindrical portion (22) being divided into twelve segments (S) by said slits (20).

## Patentansprüche

1. Metallische Spannzange (2) für Halter eines Schneidwerkzeugs mit einem kegelstumpfartigen konischen Abschnitt (21), der einen Spannenddurchmesser und einen mit. dem Spanndurchmesserende zusammenhängenden zylindrischen Abschnitt (22) aufweist, wobei die Spannzange mit in gleichen Winkelabständen und sich von ihrer Öffnung zur Aufnahme eines Schneidwerkzeugs (3) in den zylindrischen Abschnitt axial nach innen erstreckenden Schlitzen (20) ausgebildet ist, wobei die Schlitze (20) Segmente (S) des zylindrischen Abschnitts begrenzen, dadurch gekennzeichnet, daß die Anzahl der vorgesehenen Segmente gleich ist plus oder minus zwei der Anzahl der erforderlichen Segmente, daß der Wert des Zentriwinkels (Θ) jedes Segments das Maximum innerhalb des Bereiches ist, wo das Flächenträgheitsmoment (Iₜ) des gesamten zylindrischen Abschnitts (22) mit dem Produkt aus der Anzahl einzelner Segmente und dem Flächenträgheitsmoment eines Abschnitts (A) eines einzelnen Segments um eine Achse (X), welche den Schwerpunkt des Abschnitts durchsetzt und senkrecht zu einer Linie ist, welche die Mittelachse (O) der Spannzange und den Schwerpunkt durchsetzt, weitgehend konstant ist.

2. Metallische Spannzange für einen Halter (2) eines Schneidwerkzeugs mit einem kegelstumpfartigen konischen Abschnitt (21), der ein Spanndurchmesserende und einen mit dem Spanndurchmesserende zusammenhängenden zylindrischen Abschnitt (22) aufweist, wobei die Spannzange mit in gleichen Winkelabständen und sich von ihrer Öffnung zur Aufnahme eines Schneidwerkzeugs (3) axial nach innen erstreckenden Schlitzen (20) ausgebildet ist, wobei jeder Schlitz (20) einen über seine gesamte Länge gleichbleibende Breite aufweist und der zylindrische Abschnitt (22) von den Schlitzen (20) in zwölf Segmente (S) geteilt ist.

## Revendications

1. Pince de serrage métallique (2) pour un support d'outil de coupe ayant une portion conique tronquée (21) ayant une extrémité à petit diamètre et une portion cylindrique (22) continue avec ladite extrémité à petit diamètre, ladite pince étant formée avec des fentes (20) agencées à des intervalles angulaires égaux et s'étendant axialement à l'intérieur depuis une ouverture de celle-ci pour recevoir un outil de coupe (3) dans ladite portion cylindrique, lesdites fentes (20) définissant des segments (S) de ladite portion cylindrique caractérisée en ce que le nombre de segments prévus est supérieur ou inférieur par deux au nombre de segments requis pour que la valeur de l'angle central (ϑ) de chaque segment soit maximale dans la gamme où le moment d'inertie géométrique (Iₜ) de la portion cylindrique entière (22) comprenant le produit du nombre de segments individuels et du moment géométrique d'inertie d'une section (A) d'un segment individuel autour d'une ligne (X) qui passe par le centre de gravité de ladite section et qui est perpendiculaire à une ligne qui passe par l'axe (O) de la pince et ledit centre de gravité est essentiellement constant.

2. Pince de serrage métallique (2) pour un support d'outil de coupe ayant une portion conique tronquée (21) ayant une extrémité à petit diamètre et une portion cylindrique (22) continue avec ladite extrémité à petit diamètre, ladite pince étant formée avec des fentes (20) agencées à des intervalles angulaires égaux et s'étendant axialement à l'intérieur depuis une ouverture de celle-ci pour recevoir un outil de coupe (3), chaque fente (20) ayant une largeur uniforme sur toute sa longueur et ladite portion cylindrique (22) étant divisée en douze segments (S) par lesdites fentes (20)
